# EUROPEAN PATENT APPLICATION

(11) **EP 1 278 344 A1**
(43) Date of publication of application: **22.01.2003**
(21) Application number: 02700764.0
(22) Date of filing: 26.02.2002
(51) Int. Cl.: H04L 27/22

(54) **DECODER AND DECODING METHOD**

(30) Priority: 27.02.2001 JP 2001053189
(71) Applicant: MATSUSHITA ELECTRIC INDUSTRIAL CO., LTD., Kadoma-shi, Osaka 571-8501 (JP)
(72) Inventor: SAITO, Yoshiko, Yokosuka-shi, Kanagawa 239-0806 (JP); UESUGI, Mitsuru, Yokosuka-shi, Kanagawa 238-0048 (JP)
(74) Representative: Grünecker, Kinkeldey, Stockmair & Schwanhäusser Anwaltssozietät
(86) International application number: JP0201691
(87) International publication number: WO02069592

(57) **Abstract**

Converting section 201 converts I signal and Q signal in phase modulated signal of which delay wave distortion is cancelled into I' signal and Q' signal shown in I'-Q' plane, respectively. Positive/negative decision section 202 outputs decoded bit in I' signal as bit 3N+1. Positive/negative decision section 205 outputs an inversely rotated value by decoded bit in Q' signal as bit 3N. Subtracter 206 outputs a decoded bit obtained by carrying out subtraction using the absolute value of I' signal and absolute value of Q' signal as bit 3N+2. Thus, it is possible to carry out decoding of phase modulated signal while keeping apparatus size and calculation amount.

## Description

### Technical Field

The present invention relates to a decoding apparatus used in a digital mobile communication system.

### Background Art

In a reception side apparatus of a digital mobile communication system, usually, a demodulated data is obtained by carrying out the following processing. First, from a reception signal received over a propagation path, i.e., a phase modulated signal (a signal modulated by predetermined phase modulation method in a transmission side apparatus), a wave shape distortion caused by delay waves, etc. is compensated for by an equalizer. Next, using the phase modulated signal of which wave shape distortion was compensated for, a decoding processing is executed by decoding apparatus. Finally, an error correction decoding processing is performed on the signal obtained after decoding processing. Thus, the demodulated data of which the error that is occurred in a propagation path was corrected is obtained.

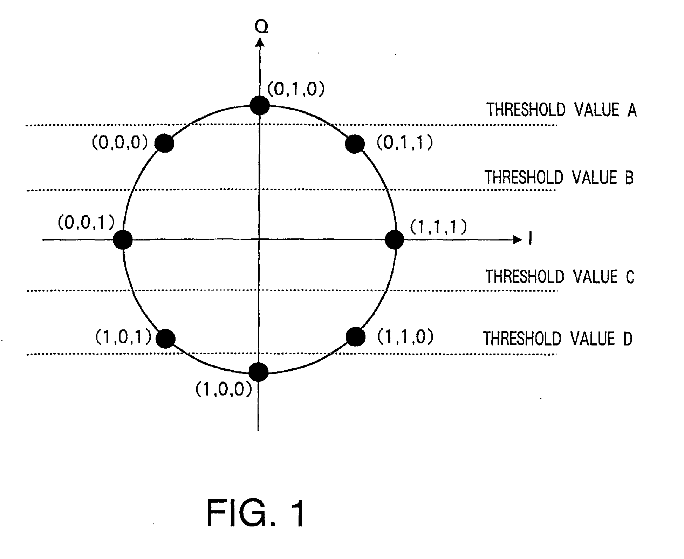

The aforementioned decoding processing are carried out specifically as given below. FIG. 1 is a diagram illustrating a signal space diagram of 8PSK used by a conventional decoding apparatus.

In a conventional decoding apparatus, threshold values A-D are set in the signal space diagram of 8PSK as shown in FIG. 1, and decoding processing are then executed. Specifically, a decision (positive/negative decision) on the I signal in the signal of which wave shape distortion was compensated for by an equalizer (hereinafter, it is referred to as "I signal") whether it has positive or negative value is carried out.

Next, a decision whether the Q signal in the signal of which a wave shape distortion was compensated for by an equalizer (hereinafter, it is referred to as "Q signal") is larger than threshold value A is carried out by a decision circuit. When Q signal is larger than threshold value A, a symbol becoming a decoding point is decided uniquely as (0,1,0).

When Q signal is smaller than threshold value A, a decision whether Q signal is larger than threshold value B is carried out by decision circuit. When Q signal is larger than threshold value B whereas I signal is determined to have a positive value in the above-mentioned positive/negative decision, a symbol becomes a decoded object is determined as (0,1,1), and when I signal is determined to have a negative value in the above-mentioned positive/negative decision, a symbol becomes a decoded object is determined as (0,0,0).

When Q signal is smaller than threshold value B, a decision whether Q signal is larger than threshold value C is carried out by decision circuit. When Q signal is larger than threshold value C whereas I signal is determined to have a positive value in the above-mentioned positive/negative decision, a symbol becomes a decoded object is determined as (1,1,1), and when I signal is determined to have a negative value in the above-mentioned positive/negative decision, a symbol becomes a decoded object is determined as (0,0,1).

When Q signal is smaller than threshold value C, a decision whether Q signal is larger than threshold value D is carried out by decision circuit. When Q signal is larger than threshold value D whereas I signal is determined to have a positive value in the above-mentioned positive/negative decision, a symbol becomes a decoded object is determined as (1,1,0), and when I signal is determined to have a negative value in the above-mentioned positive/negative decision, a symbol becomes a decoded object is determined as (1,0,1). When a Q signal is less than threshold value D, a symbol becomes a decoded object is determined uniquely as (1,0,0).

In the execution of processing such as described-above, a phase modulated signal can be decoded as a symbol unit.

However, problems, as explained below, exist in the conventional decoding apparatus . First, in order to realize the decoding of a phase modulated signal, a large number of decision circuits such as decision circuits used for deciding whether such a phase modulated signal is larger than a threshold value, decision circuits used for executing positive/negative decision of the phase modulated signal, etc. become necessary in the aforementioned conventional decoding apparatus. As a result, the size of conventional decoding apparatus and the amount of calculations become impractically large.

Second, in an error correction decoding apparatus which performs an error correction decoding on the signal decoded by the aforementioned conventional decoding apparatus, it is preferred to perform error correction decoding using not only the decoded symbol but also the likelihood of each bit included in such a symbol, rather than performing error correction decoding using only the decoded symbol because it is possible to generate a demodulated data with a remarkably high precision. That is to say, the aforementioned conventional decoding apparatus is required to output not only the decoded symbol but also the likelihood of each bit included in such a symbol to the error correction decoding apparatus in order to improve the precision of the demodulated data obtained by error correction decoding. However, the aforementioned conventional decoding apparatus is required to provide circuits which calculate the likelihood of each bit included in the symbol separately because the phase modulated signal is decoded in a symbol unit. Thus, the size of conventional decoding apparatus and amount of calculations become impractically large.

### Disclosure of Invention

It is an object of the present invention to provide a decoding apparatus that can carry out decoding of a phase modulated signal while keeping the apparatus size and calculations amount. Moreover, the present invention is to provide a decoding apparatus to calculate the likelihood of each bit included in a decoded symbol while keeping the apparatus size and calculations amount.

Such an object is achieved by decoding a phase modulated signal transmitted by a transmission side apparatus based on the locations of signal points with the same predetermined bit value in a mapping symbol that is based on M-ary phase modulation method applied by the transmission side apparatus.

### Brief Description of Drawings

FIG. 1 is a schematic diagram illustrating a signal space diagram of 8PSK used by a conventional decoding apparatus;
FIG. 2A is a schematic diagram illustrating a state of a signal space diagram of 8PSK used by a decoding apparatus according to Embodiment 1 of the present invention;
FIG. 2B is a schematic diagram illustrating a state of a signal space diagram of 8PSK used by a decoding apparatus according to Embodiment 1 of the present invention;
FIG. 3 is a schematic diagram illustrating a state of a signal space diagram of 8PSK used by a decoding apparatus according to Embodiment 1 of the present invention;
FIG. 4 is a block diagram showing a configuration of a decoding apparatus according to Embodiment 1 of the present invention;
FIG. 5 is a schematic diagram illustrating a state of a signal space diagram of π/4 shift 4PSK used by a decoding apparatus according to Embodiment 1 of the present invention;
FIG. 6 is a schematic diagram illustrating a state of a signal space diagram of an initial phase rotated 8PSK used by a decoding apparatus according to Embodiment 1 of the present invention;
FIG. 7 is a block diagram showing a configuration of a decoding apparatus according to Embodiment 2 of the present invention;
FIG. 8A is a schematic illustration of an exemplary state of a symbol mapping which rotates every symbol;
FIG. 8B is a schematic illustration of an exemplary state of a symbol mapping which rotates every symbol;
FIG. 8C is a schematic illustration of an exemplary state of a symbol mapping which rotates every symbol;
FIG. 9 is a block diagram showing a configuration of a decoding apparatus according to Embodiment 3 of the present invention;
FIG. 10 is a block diagram showing a configuration of an equalizer which outputs a phase modulated signal to a decoding apparatus according to Embodiment 4 of the present invention;
FIG. 11 is a block diagram showing a configuration of a DFE-type equalizer which outputs a phase modulated signal to a decoding apparatus according to Embodiment 5 of the present invention;
FIG. 12 is a block diagram showing a configuration of an MLSE-type equalizer which outputs a phase modulated signal to a decoding apparatus according to Embodiment 6 of the present invention;
FIG. 13A is a schematic diagram illustrating a state of a signal space diagram of 8PSK used by a decoding apparatus according to Embodiment 7 of the present invention;
FIG. 13B is a schematic diagram illustrating a state of a signal space diagram of 8PSK used by a decoding apparatus according to Embodiment 7 of the present invention;
FIG. 14 is a schematic diagram illustrating a state of a signal space diagram of 8PSK used by a decoding apparatus according to Embodiment 7 of the present invention; and
FIG. 15 is a block diagram showing a configuration of a decoding apparatus according to Embodiment 7 of the present invention.

### Best Mode for Carrying out the Invention

Hereinafter, embodiments of the present invention will be specifically described with reference to the accompanying drawings.

### (Embodiment 1)

First, a brief explanation of a decoding apparatus according to the present embodiment will be given below. A transmission side apparatus which is a decoding apparatus of a communication partner according to the present embodiment generates a phase modulated signal by performing modulation using a predetermined M-ary phase modulation method on a transmission signal subjected to an error correction coding. This transmission side apparatus transmits the generated phase modulated signal according to a decoding apparatus of the present embodiment (hereinafter, it is referred to as "decoding apparatus").

A decoding apparatus receives a phase modulated signal transmitted over a propagation path by a transmission side apparatus. In addition, a decoding apparatus compensates for wave shape distortion in the received phase modulated signal (reception signal) by an equalizer. Then, a decoding apparatus carries out a decoding of the phase modulated signal of which wave shape distortion was compensated for. In particular, such a decoding apparatus carries out the decoding based on the locations of signal points with the same predetermined bit value in a symbol mapping that is based on M-ary phase modulation method used by transmission side apparatus.

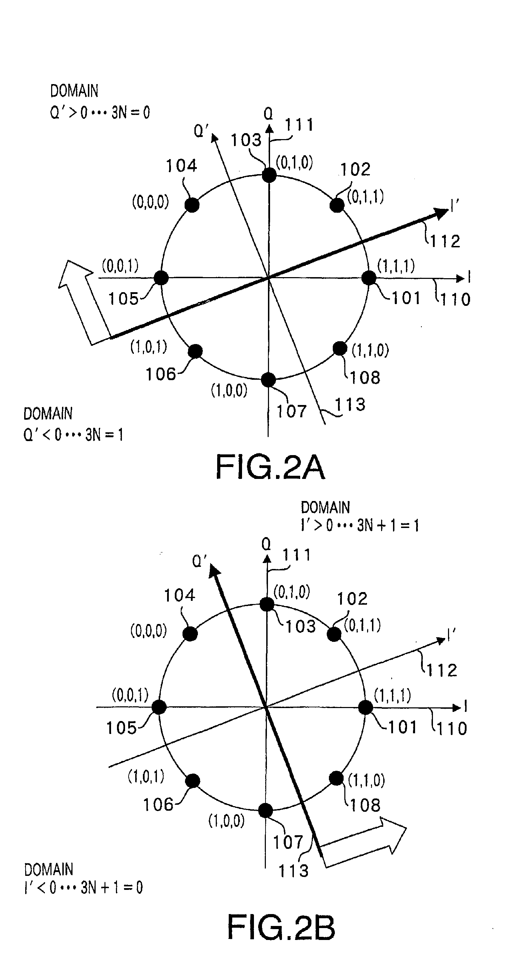

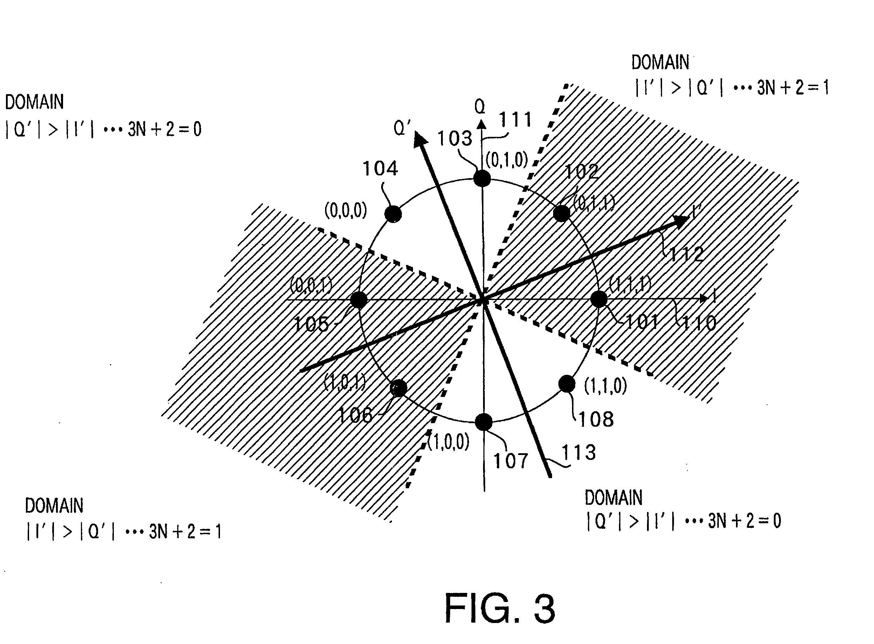

The case when using 8PSK modulation as an M-ary phase modulation method in the present embodiment will be explained below with reference to FIG. 2A, FIG. 2B and FIG. 3. FIG. 2A, FIG. 2 B and FIG. 3 are schematic diagrams illustrating the state of signal space diagram of 8PSK (symbol mapping based on 8PSK) used by the decoding apparatus according to Embodiment 1 of the present invention. Each symbol (each signal point) includes 3 bits in the symbol mapping based on 8PSK. In FIG. 2A, FIG. 2B and FIG. 3, signal point 101 to signal point 108 are located in a plane (hereinafter, it is referred to as "I-Q plane") which is formed by making the standard axis of an in-phase component as I-axis 110 and the standard axis of a quadrature component as Q-axis 111. Here, each signal point includes 3 bits, the most bit, medium bit and least bit which are expressed, respectively, by "bit 3N", "bit 3N+1" and "bit 3N+2".

First, paying attention to bit 3N of each signal point referring to FIG. 2A, signal points in which bit 3N is "0" are signal point 102 to signal point 105 whereas signal points in which bit 3N is "1" are signal point 106 to signal point 108 and signal point 101.

In other words, the signal point in which bit 3N is "0" is located in a domain formed I' axis 112 as a standard in the upper-half direction of the figure, and the signal point in which bit 3N is "1" is located in a domain formed I' axis as a standard in lower-half direction of the figure. The I' axis 112 (Q' axis 113) is obtained by rotating the I axis 110 (Q axis 111) with phase only π/8 anticlockwise around the original point O.

That is to say, the signal points in which bit 3N is "0" are equivalent to the signal points which have positive values of Q' component whereas the signal points in which bit 3N is "1" is equivalent to the signal points which have negative values of Q' component.

The Q' component (I' component) is equivalent to the signal point of quadrature component (in-phase component) allocated in the plane formed by I' axis 112 and Q' axis 113 (hereinafter, it is referred to as "I'-Q' plane).

Considering the locations related to signal points of the same value of bit 3N in the symbol mapping, if Q' component in the I'-Q' plane of the phase modulated signal of which wave shape distortion was compensated for is positive, the bit 3N included in the symbol which becomes a decoded object can be decoded as "0". Similarly, if Q' component in the I'-Q' plane of the phase modulated signal of which wave shape distortion was compensated for is negative, the symbol which becomes a decoded object and includes bit 3N can be decoded as "1".

In addition, the I' axis 112 is determined as in the following example. The mutual distance between the signal point of which bit 3N is "0" (for instance, signal point 102) and the signal point of which bit 3N is "1" (for instance, signal point 101) which becomes small is detected, and the axis passing through the middle point in the distance between every signal point and the original point O becomes I' axis 112.

Next, paying attention to bit 3N+1 of each signal point referring to FIG. 2B, signal points in which bit 3N+1 is "1" are signal point 101 to signal point 103 and signal point 108 whereas signal points in which bit 3N+1 is "0" are signal point 104 to signal point 107.

In other words, the signal points in which bit 3N+1 is "1" is located in a domain formed Q' axis 113 as a standard in upper-half direction of the figure, and the signal points in which bit 3N+1 is "0" is located in a domain formed Q' axis as a standard in lower-half direction of the figure.

In other words, the signal points in which bit 3N+1 is "1" are equivalent to the signal points which have positive value of I' component whereas the signal points in which bit 3N+1 is "0" is equivalent to the signal points which have negative value of I' component.

Considering the location related to signal points of the same value of bit 3N+1 in such a symbol mapping, if I' component in the I'-Q' plane of the phase modulated signal of which wave shape distortion was compensated for is positive, the bit 3N+1 included in the symbol which becomes a decoded object can be decoded as "1". Similarly, if I' component in the I'-Q' plane of the phase modulated signal of which wave shape distortion was compensated for is negative, the bit 3N+1 included in the symbol which becomes a decoded object can be decoded as "0".

In addition, the Q' axis 113 is determined as in the following example. The mutual distance between the signal point of which bit 3N+1 is "0" (for instance, signal point 104) and the signal point of which bit 3N+1 is "1" (for instance, signal point 103) which becomes small is detected, and the axis passing through the middle point in the distance between every signal point and the original point O becomes Q' axis 113.

Next, paying attention to bit 3N+2 of each signal point referring to FIG. 3, signal points in which bit 3N+2 is "1" are the signal point 101, signal point 102, signal point 105 and signal point 106 whereas signal points in which bit 3N+2 is "0" are signal point 103, signal point 104, signal point 107 and signal point 108.

That is to say, signal points in which bit 3N+2 is "1" are equivalent to signal points of which |I' component| > |Q' component| whereas signal points in which bit 3N+2 is "0" are equivalent to signal points of which |I' component| < |Q' component|.

Considering the locations related to signal points of the same value of bit 3N+2 in such a symbol mapping, if the absolute value of I' component is larger than the absolute value of Q' component in the I'-Q' plane of the phase modulated signal of which wave shape distortion was compensated for, the bit 3N+2 included in the symbol which becomes a decoded object can be decoded as "1". Similarly, if the absolute value of Q' component is larger than the absolute value of I' component in the I'-Q' plane of the phase modulated signal of which wave shape distortion was compensated for, the bit 3N+2 included in the symbol which becomes a decoded object can be decoded as "0".

According to the aforementioned such a decoding, each bit (bit 3N to bit 3N+2) included in the symbol which becomes a decoded object can be decoded.

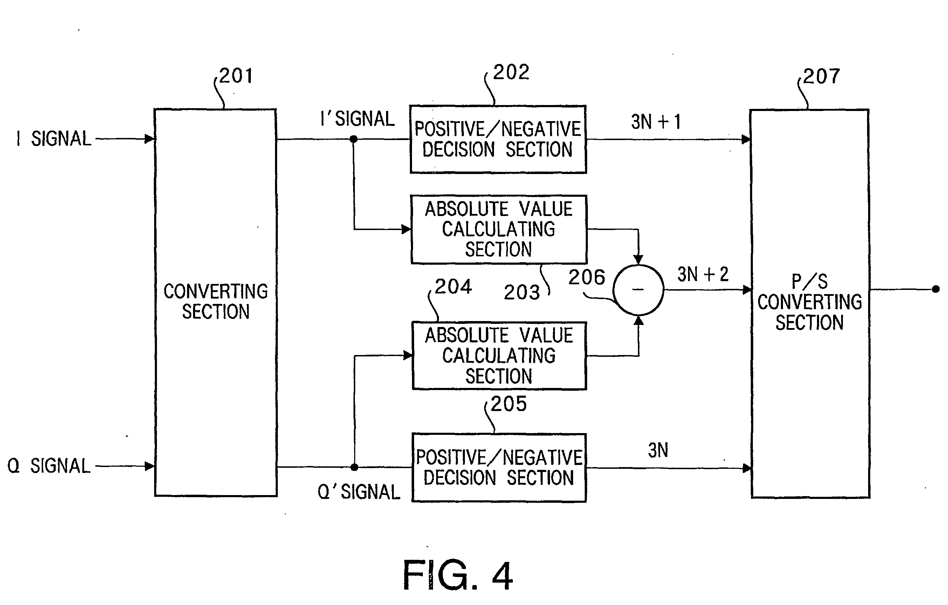

With reference to FIG. 4, specific configuration of the decoding apparatus realizes decoding as described above will be explained below. FIG. 4 is a block diagram showing a configuration of a decoding apparatus according to Embodiment 1 of the present invention.

In FIG. 4, I signal (I component) and Q signal (Q component) in a phase modulated signal of which a wave shape distortion is compensated for by an equalizer not shown in the figure are inputted into converting section 201. A conversion of I signal and Q signal in the phase modulated signal is executed in converting section 201. In other words, in converting section 201, I signal and Q signal perform an I-Q plane are converted into I' signal and Q' signal to perform an I'-Q' plane, respectively. That is to say, the I signal and Q signal shown by the I-Q plane are converted, respectively, into I' signal and Q' signal shown by the I'-Q' plane in converting section 201. Specifically, referring to FIG. 2A, for instance, when a phase modulated signal corresponds to signal point 102 is inputted into converting section 201, the I signal of such a phase modulated signal is converted from I1 shown by I-Q plane into I1' shown by I'-Q' plane. Similarly, the Q signal of such a phase modulated signal is converted from Q1 shown by I-Q plane into Q1' shown by I'-Q' plane. Such a conversion is equivalent to rotating the phase of the phase modulated signal by only π/8 in anticlockwise direction. According to such a conversion, I' signal and Q' signal are obtained in converting section 201.

The obtained I' signal is outputted to positive/negative decision section 202 and absolute value calculating section 203. The obtained Q' signal is outputted to positive/negative decision section 205 and absolute value calculating section 204.

A positive/negative decision is carried out on the I' signal in positive/negative decision section 202. As a result of such positive/negative decision, when an I' signal is of positive value, "1" is outputted as bit 3N+1 to parallel/serial (it is referred to as "P/S") converting section 207, while when I' signal is of negative value, "0" is outputted as bit 3N+1 to P/S converting section 207. In other words, a code bit in the I' signal is just outputted as bit 3N+1 to P/S converting section 207 from positive/negative decision section 202.

A positive/negative decision is carried out on the Q' signal in positive/negative decision section 205. As a result of such positive/negative decision, when Q' signal is of positive value, "0" is outputted as bit 3N to P/S converting section 207 whereas if Q' signal is a negative number, "1" is outputted as bit 3N. In other words, a value that reverse the rotation of the code bit in the Q' signal is just outputted as bit 3N to P/S converting section 207 from positive/negative decision section 205.

The absolute value of the I' signal is calculated in absolute value calculating section 203. The obtained absolute value of the I' signal is outputted to subtractor 206. The absolute value of the Q' signal is calculated in absolute value calculating section 204. The obtained absolute value of the Q' signal is outputted to subtractor 206.

A subtraction is carried out in subtractor 206 using the absolute value of I' signal and absolute value of Q' signal, i.e., carrying out |I' signal| - |Q' signal|. As a result of such subtraction, when |I' signal| > |Q' signal|, "1" is outputted as bit 3N+2 to P/S converting section 207, while when |I' signal| < |Q' signal|, "0" is outputted as bit 3N+2 to P/S converting section 207. That is to say, the code bit in the signal obtained by subtraction calculated in subtractor 206 is just outputted as bit 3N+2 to P/S converting section 207.

Bit 3N from positive/negative decision section 205, bit 3N+1 from positive/negative decision section 202 and bit 3N+2 from subtractor 206 are rearranged in P/S converting section 207. Then, bit 3N, bit 3N+1 and bit 3N+2 are outputted sequentially from P/S converting section 207.

In addition, the aforementioned explained decoding can be realized not only by hardware but it can be realized by CPU microprocessors or monolithic IC such as LSI, etc.

In the decoding apparatus according to the present embodiment as shown above, considering the locations of signal points with the same predetermined bit value in the symbol mapping that is based on M-ary phase modulation method used by a decoding apparatus in transmission side, it is possible to decode a phase modulated signal easily by using the in-phase/quadrature component of the phase modulated signal and the difference between the absolute value of in-phase component and absolute value of quadrature component of the phase modulated signal. It is possible to keep the apparatus size and calculations amount of the decoding apparatus according to the present embodiment because a decision circuits become unnecessary when decoding a phase modulated signal.

In addition, in the present embodiment, although a case when using 8PSK as an M-ary phase modulation method was explained, but the present invention can be applied also to the case when using any other M-ary phase modulation method beside the 8PSK method (for example, 4PSK method, 16PSK method, etc.). In this case, considering locations of signal points with the same predetermined bit value in symbol mapping that is based on M-ary phasemodulationmethod, it is possible to decode the phase modulated signal easily if using the features inherent in such symbol mapping (for instance, in 8ASK method, bit 3N+1 included in a symbol which becomes a decoded object can be decoded as "1" if I' component is positive, etc.).

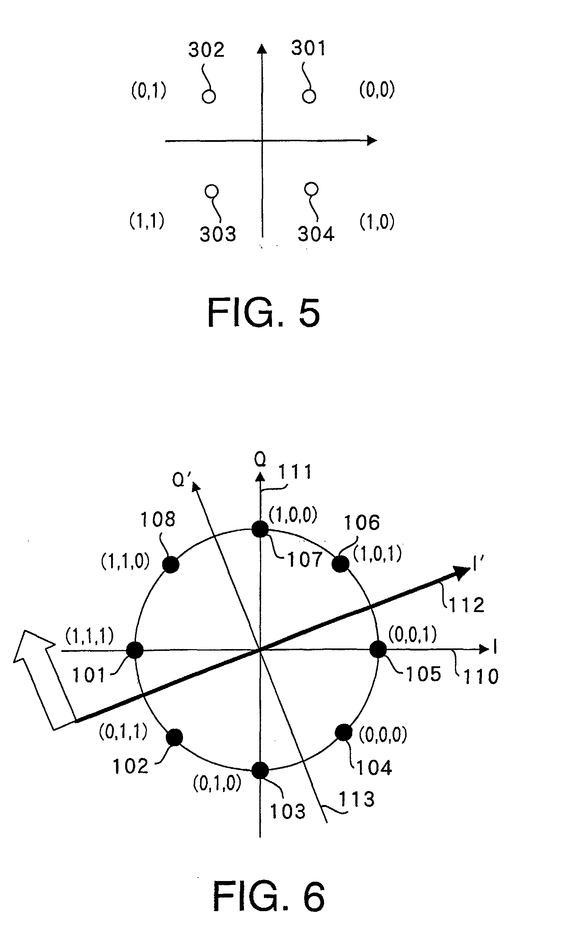

Referring to FIG. 5, decoding method in the case when using π/4 shift 4PSK as an M-ary phase modulation method beside the 8PSK method will be explained below. FIG. 5 is a schematic diagram illustrating a state of signal space diagram of π/4 shift 4PSK (symbol mapping based on π/4 shift 4PSK) used by decoding apparatus according to Embodiment 1 of the present invention.

In symbol mapping based on 4PSK, each symbol (each signal point) includes 2 bits. Here, the most bit and least bit are expressed, respectively, by "bit 2N" and "bit 2N+1" in each signal point that includes 2 bits.

Paying attention to signal points of the same bit 2N value in symbol mapping shown in FIG. 5, signal points in which bit 2N is "0" are signal point 301 and signal point 302 whereas signal points in which bit 2N is "1" are signal point 303 and signal point 304. In other words, the signal points in which bit 2N is "0" are located in a domain formed I axis as a standard in upper-half direction of the figure, and signal points in which bit 2N is "1" are located in a domain formed I axis as a standard in lower-half direction of the figure. That is to say, the signal points in which bit 2N is "0" are equivalent to signal points which have positive values of Q component whereas signal points in which bit 2N is "1" are equivalent to signal points which have negative number of Q component.

Considering the locations related to signal points of the same value of bit 2N in such a symbol mapping, if Q component in the I-Q plane of the phase modulated signal is positive, bit 2N included in the symbol which becomes a decoded object can be decoded as "0". Similarly, if Q component in the I-Q plane of the phase modulated signal is negative, bit 2N included in the symbol which becomes a decoded object can be decoded as "1".

On the other hand, paying attention to signal points of similar bit 2N+1 value in symbol mapping shown in FIG. 5, signal points in which bit 2N+1 is "0" are signal point 301 and signal point 304 whereas signal points in which bit 2N+1 is "1" are signal point 302 and signal point 303. In other words, signal points in which bit 2N+1 is "0" are located in a domain formed Q axis as a standard in right-half of the figure, and signal points in which bit 2N+1 is "1" are located in a domain formed Q axis as a standard in left-half of the figure. That is to say, signal points in which bit 2N+1 is "0" are equivalent to signal points which have positive values of I component whereas signal points in which bit 2N+1 is "1" are equivalent to signal points which have negative number of I component.

Considering the locations related to signal points of the same value of bit 2N+1 in such a symbol mapping, if I component in the I-Q plane of the phase modulated signal is positive, bit 2N+1 included in the symbol which becomes a decoded object can be decoded as "0". Similarly, if I component in the I-Q plane of the phase modulated signal is negative, bit 2N+1 included in the symbol which becomes a decoded object can be decoded as "1".

Moreover, it is possible to decode easily a phase modulated signal not only in the case when using π/4 shift 4PSK method, but also in the case when using 4PSK method as paying attention to the locations of signal points with the same predetermined bit value in the symbol mapping that is based on 4PSK method.

### (Embodiment 2)

In Embodiment 1, initial phase of the symbol mapping in the received phase modulated signal is detected, the case when executing a decoding based on the detected initial phase in Embodiment 2 of the present invention will be explained.

The decoding apparatus according to the aforementioned Embodiment 1 is in synchronous with transmission side apparatus when starting communication. Thus, symbol mapping in a decoding apparatus coincide with symbol mapping in a transmission side apparatus. However, there is a case where the state of the symbol mapping in a decoding apparatus rotates into a symbol mapping in a transmission side apparatus because of the influence of propagation path during reception. Such a case will be explained with reference to FIG. 6. FIG. 6 is a schematic diagram illustrating a state of a signal space diagram of a rotated initial phase 8PSK which is used by a decoding apparatus according to Embodiment 1 of the present invention.

As shown in FIG. 6, initial phase of symbol mapping in a decoding apparatus, by the effect of propagation path, in comparison to initial phase of symbol mapping of a transmission side apparatus (refers to FIG. 2A) is rotated 180 degree. In this case, if a decoding apparatus uses a method explained in Embodiment 1, it is expected that a wrong decoding is carried out. Specifically, in the case when initial phase is not rotated as shown in FIG. 2A, if Q' component in the I'-Q' plane of the phase modulated signal is positive, it is possible to decode correctly bit 3N as "0". However, in the case when initial phase is rotated 180 degree as shown in FIG. 6, if Q' component in the I'-Q' plane of the phase modulated signal is positive, bit 3N is erroneously decoded as "0" despite the fact that original bit 3N should be decoded as "1".

The decoding apparatus according to the present embodiment, detects the phase rotation amount of the symbol mapping in the received phase modulated signal using any known signal transmitted by a transmission side apparatus even after acquiring synchronization with such a transmission side apparatus, and the decoding is carried out based on the detection result.

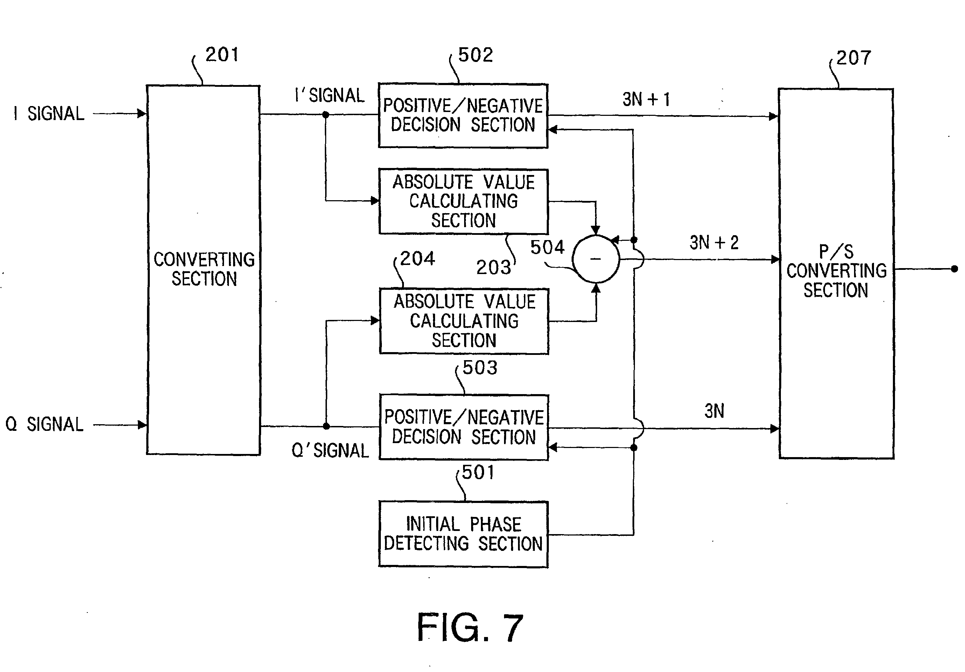

A configuration of a decoding apparatus according to the present invention will be explained with reference to FIG. 7. FIG. 7 is a block diagram showing a configuration of a decoding apparatus according to Embodiment 2 of the present invention. In addition, sections in FIG. 7 which are similar to those in FIG. 4 are assigned similar reference numerals and explanations thereof will be omitted.

In FIG. 7, initial phase detecting section 501 detects the initial phase of symbol mapping in a phase modulated signal by detecting the phase rotation amount of the symbol mapping in the phase modulated signal using any known signal transmitted by transmission side apparatus. Such an initial phase detecting element 501 notifies positive/negative decision section 502 and positive/negative decision section 503 of the detected initial phase.

Positive/negative decision section 502 has a configuration similar to positive/negative decision section 202 shown in FIG. 4 except the following point. That is, positive/negative decision section 502 outputs bit 3N+1 to P/S converting section 207 using the initial phase detected by initial phase detecting section 501. Specifically, in the case when initial phase is rotated 180 degree as shown in FIG. 6, if I' component in the I'-Q' plane of the phase modulated signal is positive, bit 3N+1 is decoded as "0" and decoded as "1" if I' component is negative. In addition, it is needless to say that when initial phase does not rotate, positive/negative decision section 502 outputs bit 3N+1 same as positive/negative decision section 202 in Embodiment 1. Moreover, it is needles also to say that when initial phase rotates with any phase except 180 degrees, positive/negative decision section 502 outputs bit 3N+1 corresponding to the phase of which initial phase is rotated.

Positive/negative decision section 503 has a configuration similar to positive/negative decision section 205 shown in FIG. 4 except the following point. That is, positive/negative decision section 503 outputs bit 3N to P/S converting section 207 using the initial phase detected by initial phase detecting section 501. Specifically, in the case when initial phase is rotated 180 degree as shown in FIG. 6, for instance, if Q' component in the I'-Q' plane of the phase modulated signal is positive, bit 3N is decoded as "1" and decoded as "0" if Q' component is negative. In addition, it is needless to say that when initial phase does not rotate, positive/negative decision section 503 outputs bit 3N same as positive/negative decision section 205 in Embodiment 1. Moreover, when initial phase rotates with any phase except 180 degrees, positive/negative decision section 503 outputs bit 3N corresponding to the phase of which initial phase is rotated.

Subtractor 504 has a configuration similar to subtractor 206 shown in FIG. 4 except the following point. That is, subtractor 504 outputs bit 3N+2 to P/S converting section 207 using the initial phase detected by initial phase detecting section 501. Specifically, when initial phase rotates 180 degree as shown in FIG. 6, for instance, similar to subtractor 206 in Embodiment 1, bit 3N+2 is outputted. Moreover, it is needles to say that when initial phase rotates with any phase except 180 degrees, subtractor 504 outputs bit 3N+2 corresponding to the phase of which initial phase is rotated.

In the decoding apparatus according to the present embodiment as shown above, considering the locations of signal points with the same predetermined bit value in symbol mapping that is based on an M-ary phase modulation method used by a decoding apparatus in transmission side, it is possible to decode a phase modulated signal easily by using the in-phase/quadrature component of the phase modulated signal and the difference between the absolute value of the in-phase component and absolute value of quadrature component of the phase modulated signal. It is possible to keep the apparatus size and calculations amount of the decoding apparatus according to the present embodiment because decision circuits become unnecessary when decoding a phase modulated signal.

Moreover, in decoding apparatus according to the present embodiment, phase rotation amount of symbol mapping in the received phase modulated signal is detected, the initial phase is detected using the detected phase rotation amount, and a decoding based on the detected initial phase is carried out. Thus, it is possible to correctly decode the phase modulated signal even in the case when there is state rotation in the symbol mapping in a received phase modulated signal from symbol mapping in a transmission side apparatus caused by the influence of propagation path.

### (Embodiment 3)

In Embodiment 3 of the present invention, the case when demodulating the phase modulated signal which rotates symbol mapping in Embodiment 1 every unit time will be explained below.

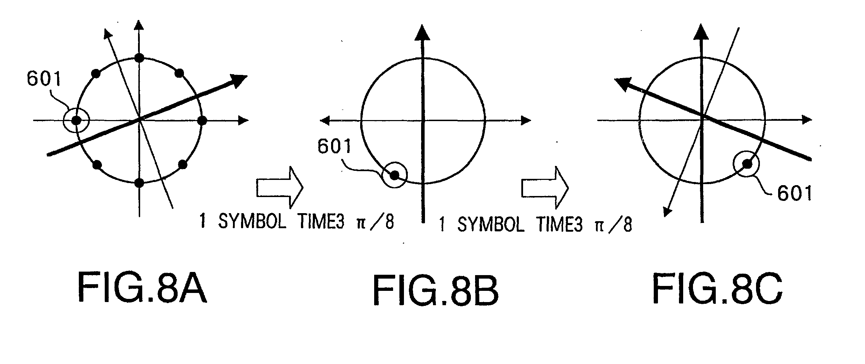

Recently, in EDGE (Enhanced Data rate for Global Evolution) that attracts attention as a digital radio communication system of the next generation as shown in FIG. 8A to FIG. 8C, the rotation of symbol mapping every symbol in a transmission side apparatus is proposed. In particular, considering the signal point 601, for example, such signal point 601 moves to a location that rotates Only 3π/8 every symbol. When such a feature is applied, a decoding apparatus according to Embodiment 1 is to receive the phase modulated signal of which the symbol mapping rotates every symbol. Thus, a decoding apparatus according to the present embodiment decodes a phasemodulation signal based on symbol mapping which rotates every unit time (here, every symbol).

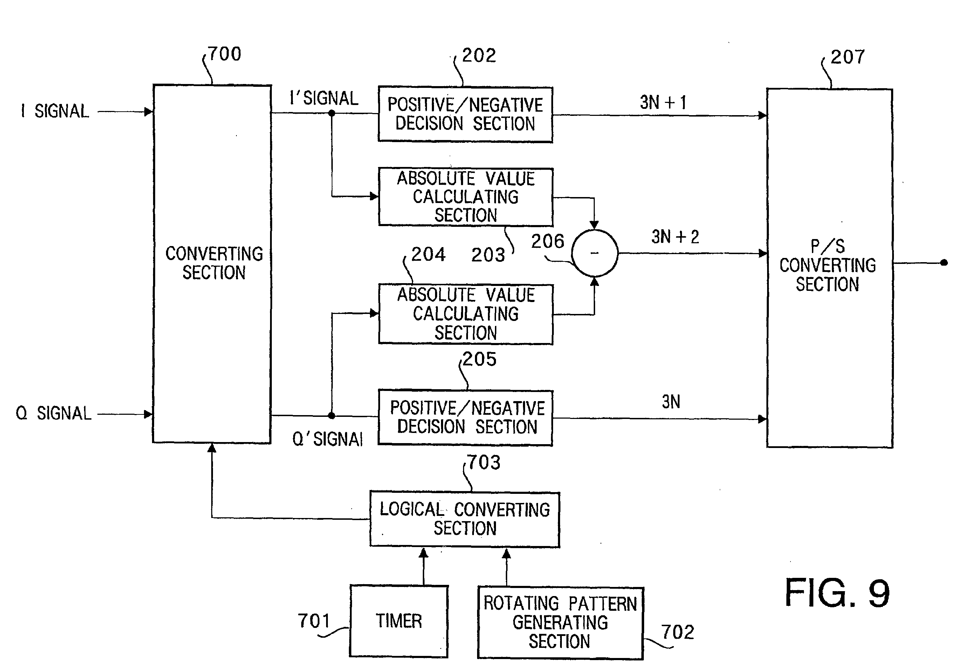

A configuration of a decoding apparatus according to the present invention will be explained with reference to FIG. 9. FIG. 9 is a block diagram showing a configuration of a decoding apparatus according to Embodiment 3 of the present invention. In addition, sections in FIG. 9 which are similar to those in FIG. 4 are assigned similar reference numerals and explanations thereof will be omitted.

Timer 701 in FIG. 9 acquires the time corresponding to 1 symbol then notifies logical converting section 703. Rotation pattern generating section 702 generates rotation pattern that shows only the phase of which symbol mapping rotates every 1 symbol, and notifies the logical converting section 703. In addition, it is needless to say that the same rotation pattern generated by rotation pattern generating section 702 are used by a transmission side apparatus. Logical converting section 703 uses the time acquired in timer 701 and rotation pattern generated by rotation pattern generating section 702, estimates the symbol mapping in the phase modulated signal presently received, notifies estimation result to converting section 700.

First, converting section 700 adds both fixed rotation amount corresponds to symbol mapping of phase modulated signal and rotation amount based on the result of estimation in logical converting section 703. Next, converting section 700 uses the rotation amount obtained by such addition, and converts I signal and Q signal in a phase modulated signal into I' signal and Q' signal, respectively. I' signal and Q' signal obtained by converting section 700 are subjected to the same processing explained in the aforementioned Embodiment 1 (FIG. 3).

In the decoding apparatus according to the present embodiment as shown above, considering the locations of signal points with the same predetermined bit value in the symbol mapping which is based on M-ary phase modulation method used by a decoding apparatus in transmission side, it is possible to decode phase modulated signal easily by using the in-phase/quadrature component of the phase modulated signal and difference between the absolute value of in-phase component and absolute value of quadrature component of phase modulated signal. It is possible to keep apparatus size and calculations amount of the decoding apparatus according to the present embodiment because decision circuits become unnecessary when decoding a phase modulated signal.

Moreover, in decoding apparatus according to the present embodiment, rotation pattern which is applied by transmission side apparatus in a phase modulated signal is restored and decoding is carried out. Accordingly, it is possible to correctly decode a phase modulated signal even when transmission side apparatus rotates the symbol mapping every unit time.

In addition, although the case when symbol mapping is rotated in unit time, time corresponds to 1 symbol is explained in the present invention, but the same effect can be obtained as described above also in the case when using any other time as a unit time.

### (Embodiment 4)

In Embodiment 4 of the present invention, a case when an equalizer which outputs a phase modulated signal to decoding apparatus when the phase modulated signal of which the symbol mapping is rotated every symbol is decoded, uses tap coefficients of which phase rotation corresponds to rotation pattern and generates a phase modulated signal of which the rotation pattern is restored in order to compensate for wave shape distortion will be explained.

As described in Embodiment 3, when a phase modulated signal of which the symbol mapping rotates every symbol is decoded, that is to say, when a phase modulated signal of which the symbol mapping rotates, for instance, 3π /8 every symbol is decoded, a signal point (here, the signal point is assumed to be (0,0,1)) can mapped into 16 positions . In this case, such a signal point is mapped on I axis or Q axis every 4 symbols. As a result, it is necessary for the phase modulated signal to rotate every 4 symbol when the phase modulated signal is decoded using a decoding apparatus according to Embodiment 1.

Thus, the rotated phase modulated signal in the decoding apparatus according to Embodiment 1 is changed in the present embodiment, and a phase rotating is multiplied by tap coefficients used by an equalizer. The phase modulated signal of a rotated phase is outputted from the equalizer. Therefore, a decoding apparatus according to the present embodiment can demodulate the phase modulated signal of which rotation pattern was stored so that a wave shape distortion is compensated for by such an equalizer.

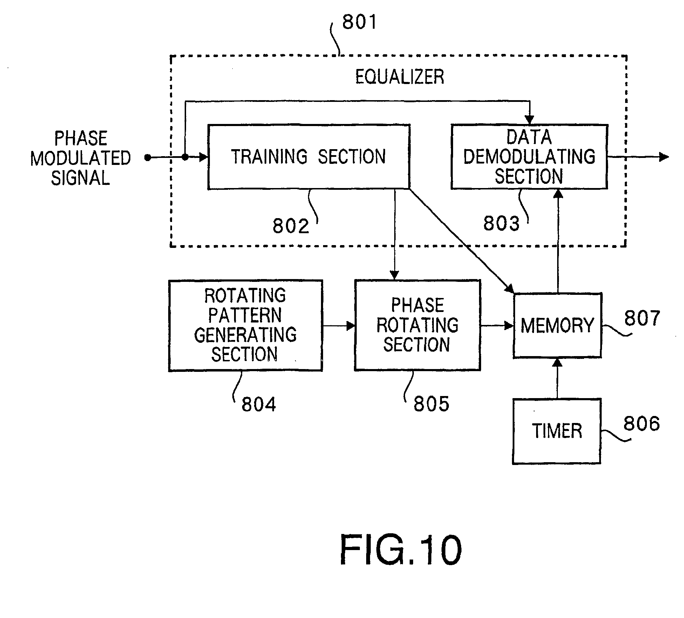

A configuration of an equalizer which outputs phase modulated signal to a decoding apparatus according to the present embodiment will be explained with reference to FIG. 10. FIG. 10 is a block diagram showing a configuration of an equalizer which outputs a phase modulated signal to a decoding apparatus according to Embodiment 4 of the present invention.

After the phase modulated signal received via a propagation path is subjected to predetermined radio reception processing, it is inputted into training section 802 in equalizer 801. Training section 802 generates/updates tap coefficients using a phase modulated signal. In addition, generating/updating of tap coefficients in training section 802 can be realized, for instance, by using the correlation value of the phase modulated signal and unique word or using an impulse response value obtained by an adaptive algorithm. The generated/updated tap coefficients are stored in memory 807, and outputted to phase rotating section 805.

Rotation pattern generating section 804 generates rotation pattern that shows only the phase of which symbol mapping rotates every 1 symbol, and outputs the result to phase rotating section 805. Phase rotating section 805 multiplies the phase rotation every symbol mapping by tap coefficients from training section 802 based on rotation pattern generated by rotation pattern generating section 804. Phase rotation which is multiplied by tap coefficients is stored in memory 807.

Timer 806 acquires the time corresponding to 1 symbol and outputs the result to memory 807. Memory 807 outputs either phase rotation which is not multiplied by tap coefficients in training section 802 or phase rotation which is multiplied by tap coefficients in phase rotating section to data demodulating section 803 according to the time acquired by timer 806. Data demodulating section 803 not only compensates for wave shape distortion using tap coefficients from memory 807 and phase modulated signal (input signal) but also outputs the phase modulated signal of which the phase is multiplied to decoding apparatus according to the present invention (or decoding apparatus according to Embodiment 1, decoding apparatus having equivalent configuration, etc.).

Thus, the decoding apparatus according to present invention not only can perform phase rotation on the phase modulated signal every symbol when phase modulated signal of which symbol mapping rotates every symbol is demodulated in transmission side apparatus, but also can correctly decode such a phase modulated signal.

As described above, in the present embodiment, a case when an equalizer which outputs a phase modulated signal to decoding apparatus when the phase modulated signal of which the symbol mapping rotates every symbol is decoded, uses tap coefficients of which phase rotation corresponds to rotation pattern and generates a phase modulated signal of which rotation pattern is restored to compensate for wave shape. As a result, a decoding apparatus according to the present embodiment can simply demodulate the phase modulated signal of which wave shape distortion is compensated for by such an equalizer.

### (Embodiment 5)

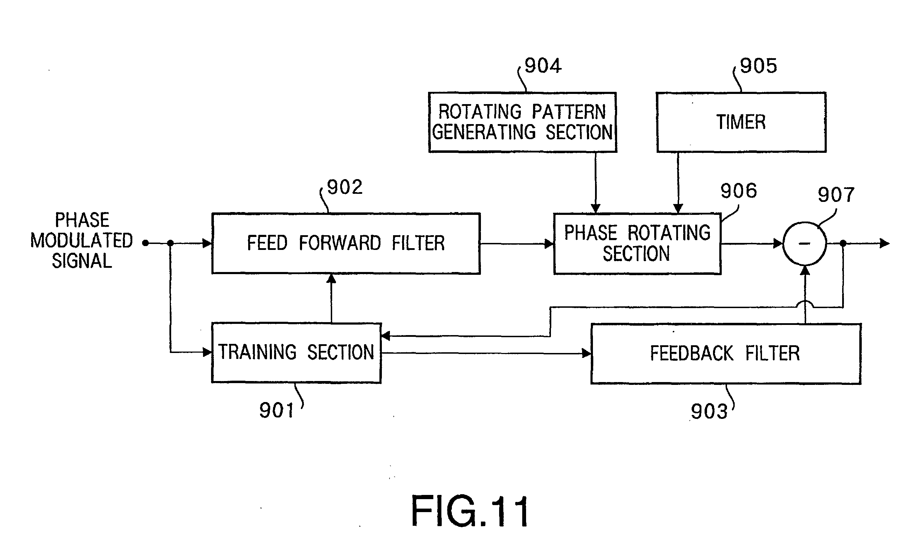

In Embodiment 5 of the present invention the case when using a DFE (Decision Feedback Equalizer)-type equalizer as the equalizer in Embodiment 4 will be explained with reference to FIG. 11. FIG. 11 is a block diagram showing a configuration of a DFE-type equalizer which outputs a phase modulated signal to a decoding apparatus according to Embodiment 5 of the present invention.

After the phase modulated signal which is received via propagation path is subjected to predetermined reception processing, it is inputted into training section 901 and feed forward filter (hereinafter, it is abbreviated as FFF) 902 in a DFE-type equalizer as shown in FIG. 11. Training section 901 carries out generating/updating of tap coefficients using subtraction result from the subtractor 907 to be described later and phase modulated signal. Generated/updated tap coefficients are used by FFF 902 and feedback filter (hereinafter, it is abbreviated as FBF) 903. The phase modulated signal which passed through FFF 902 is outputted to phase rotating section 906.

Rotation pattern generating section 904 generates rotation pattern that shows only the phase of which symbol mapping rotates every 1 symbol, and outputs the result to phase rotating section 906. Timer 905 acquires the time corresponding to 1 symbol and outputs the result to phase rotating section 906. Phase rotating section 906 acquires the phase rotation of the phase modulated signal which passed through FFF 902 every symbol mapping based on rotation pattern generated by rotation pattern generating section 904 and the time acquired by timer 905. The phase modulated signal which is acquired by phase rotation is outputted to subtractor 907.

Subtractor 907 not only compensates for wave shape distortion by executing subtraction using a phase modulated signal acquired by phase rotation and phase modulated signal passed through FBF 903, but also outputs the phase modulated signal of which the phase is multiplied to decoding apparatus according to the present invention (decoding apparatus according to Embodiment 1, decoding apparatus having equivalent configuration, etc.).

Thus, the decoding apparatus according to the present invention not only can perform phase rotation on the phase modulated signal every symbol when phase modulated signal of which symbol mapping rotates every symbol is demodulated in transmission side apparatus, but also can correctly decode such a phase modulated signal.

As described above, in the present embodiment, a case when a DFE-type equalizer which outputs a phase modulated signal to decoding apparatus when the phase modulated signal of which the symbol mapping rotates every symbol is decoded, uses tap coefficients of which phase rotation corresponds to rotation pattern and generates a phase modulated signal of which a wave shape distortion is compensated for. As a result, a decoding apparatus according to the present embodiment can simply demodulate the phase modulated signal of which the wave shape distortion is compensated for by such a DEF-type equalizer.

### (Embodiment 6)

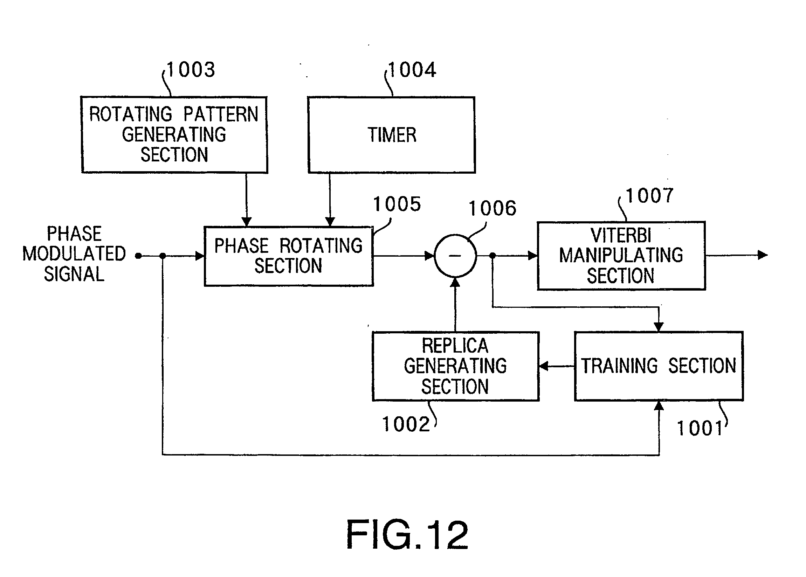

In Embodiment 6 of the present invention the case when using an MLSE (Maximum Likelihood Sequence Estimation)-type equalizer as the equalizer in Embodiment 4 will be explained with reference to FIG. 12. FIG. 12 is a block diagram showing a configuration of an MLSE-type equalizer which outputs a phase modulated signal to a decoding apparatus according to Embodiment 6 of the present invention.

After the phase modulated signal which is received via propagation path is subjected to predetermined reception processing, it is inputted into training section 1001 in an MLSE-type equalizer and phase rotating section 1005 as shown in FIG. 12.

Training section 1001 carries out generating/updating of tap coefficients using modulated signal and subtraction result from subtractor 1006 to be described later. The generated/updated tap coefficients are outputted to replica generating section 1002. Replica generating section 1002 generates a replica signal based on tap coefficients generated/updated in training section 1001 and outputs the result to subtractor 1006.

Rotation Pattern generating section 1003 generates rotation pattern which shows only the phase of which symbol mapping rotates every 1 symbol, and outputs the result to phase rotating section 1005. Timer 1004 acquires the time corresponding to 1 symbol and outputs the result to phase rotating section 1005. Phase rotating section 1005 acquires the phase rotation of the phase modulated signal every symbol mapping based on the rotation pattern generated by rotation pattern generating section 1003 and the time acquired by timer 1004. Phase modulated signal which is acquired by phase rotation is outputted to subtractor 1006.

Subtractor 1006 subtracts a replica signal generated in replica generating section 1002 from the phase modulated signal of which a phase rotation is acquired and the subtraction result is outputted to training section 1001 and Viterbi manipulating section 1007.

Viterbi manipulating section 1007 not only carries out Viterbi manipulation in which branch metric in the path metric of each state is calculated and the minimum path is selected based on the calculation result, but also outputs the phase modulated signal of which the phase is acquired to compensate for wave shape distortion to decoding apparatus according to the present invention (decoding apparatus according to Embodiment 1, decoding apparatus having a equivalent configuration, etc.).

Thus, the decoding apparatus according to present invention not only can perform phase rotation on the phase modulated signal every symbol when phase modulated signal of which symbol mapping rotates every symbol is demodulated in transmission side apparatus, but also can correctly decode such a phase modulated signal.

As described above, in the present embodiment, a case when an MLSE-type equalizer which outputs a phase modulated signal to decoding apparatus when the phase modulated signal of which the symbol mapping rotates every symbol is decoded, uses tap coefficients of which phase rotation corresponds to rotation pattern and generates a phase modulated signal of which a wave shape distortion is compensated for. As a result, a decoding apparatus according to the present embodiment can simply demodulate the phase modulated signal of which the wave shape distortion is compensated for by such an MLSE-type equalizer.

### (Embodiment 7)

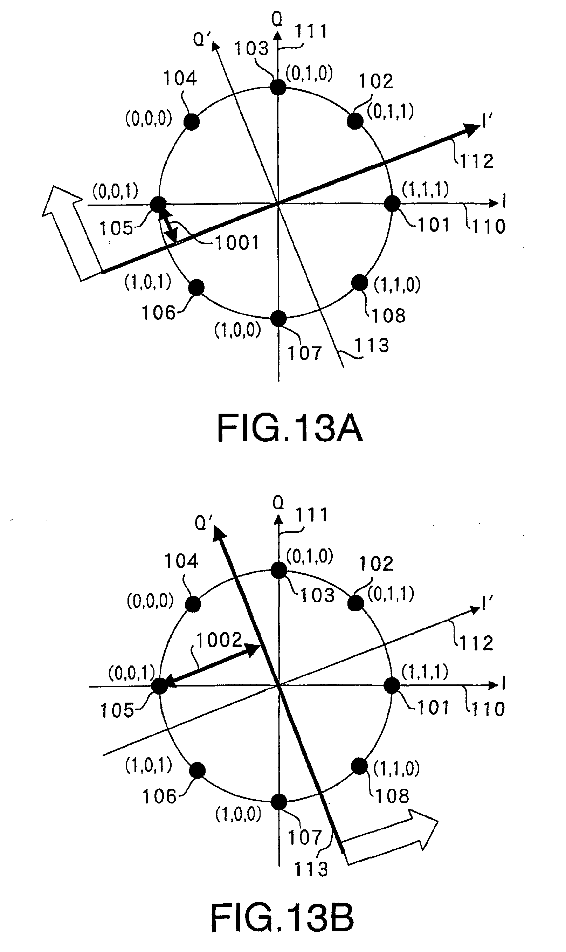

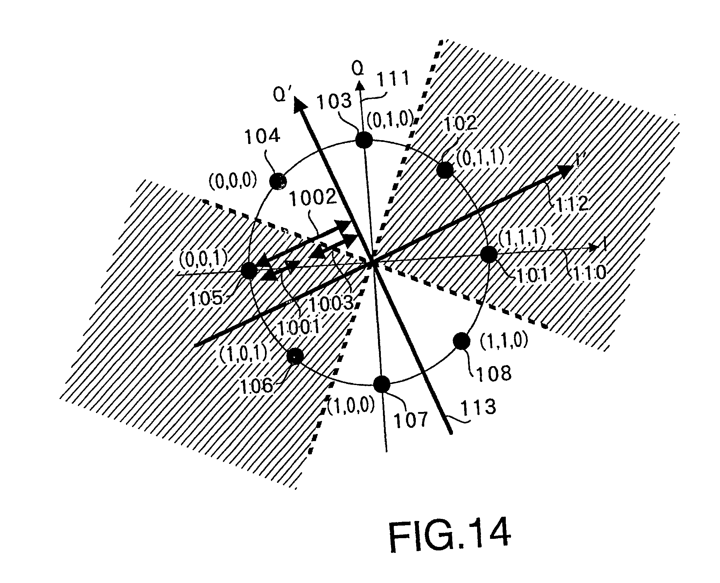

The case when calculating the likelihood of each bit included in the symbol decoded in Embodiment 1 to Embodiment 5 will be explained in Embodiment 7 of the present invention with reference to FIG. 13A, FIG. 13B and FIG. 14. FIG. 13A, FIG. 13B and FIG. 14 are schematic diagrams illustrating state of signal space diagram of 8PSK (symbol mapping based on 8PSK) used by decoding apparatus according to Embodiment 7 of the present invention. In addition, elements in FIG. 13 and FIG. 14 which are similar to those in FIG. 2 and FIG. 3 are assigned the same reference numerals as in FIG. 2 and FIG. 3 and explanation thereof is omitted.

considering bit 3N in each signal point as shown in FIG. 13A, the likelihood of bit 3N of the signal point is of distance from I' axis 112 of such signal point. For example, the likelihood of bit 3N of signal point 105 is of distance 1001 from I' axis 112 of this signal point 105. Such an I' axis 112 is equivalent to the boundary line of which bit 3N is either "0" or "1". The large (small) distance from I' axis 112 of signal point is equivalent to large (small) likelihood of bit 3N corresponding to such signal point.

Considering bit 3N+1 in each signal point as shown in FIG. 13B, the likelihood of bit 3N+1 of the signal point is of distance from Q' axis 113 of such signal point. For example, the likelihood of bit 3N+1 of signal point 105 is of distance 1002 from Q' axis 113 of this signal point 105. Such a Q' axis 113 is equivalent to the boundary line of which bit 3N+1 is either "0" or "1". The large (small) distance from Q' axis 113 of signal point is equivalent to large (smal1) likelihood of bit 3N+1 corresponding to such a signal point.

Considering bit 3N+2 in each signal point as shown in FIG. 14, the likelihood of bit 3N+2 of the signal point becomes the absolute value of the difference between the distance from I' axis 112 of such signal point and the distance from Q' axis 113 of this signal point. For example, the likelihood of bit 3N+2 of signal point 105 becomes the absolute value of the difference between distance 1002 from Q' axis 113 of such a signal point 105 and distance 1001 from I' axis of such a signal point 105. The large (small) difference absolute value of the distance between the distance from I' axis 112 of the signal point and distance from Q' axis 113 of such a signal point is equivalent to large (small) likelihood of bit 3N+2 corresponding to such signal point.

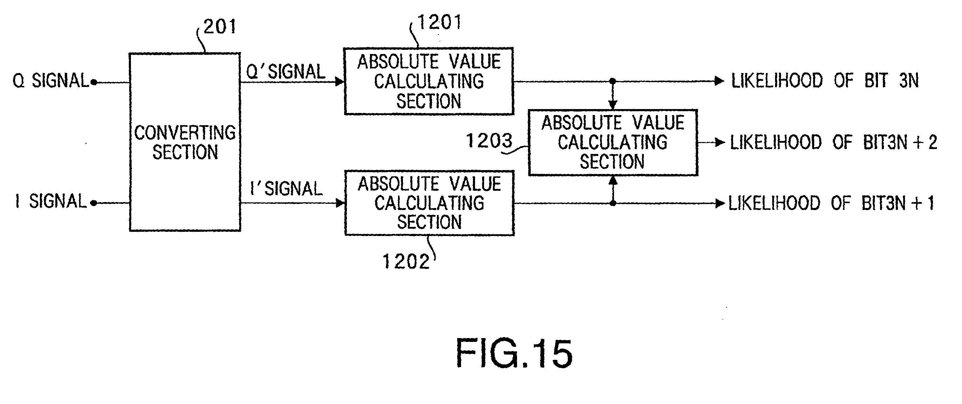

Specific configuration of the a decoding apparatus which calculates the likelihood as described above will be explained below with reference to FIG. 15. FIG. 15 is a block diagram showing a configuration of a decoding apparatus according to Embodiment 7 of the present invention. In addition, a configuration in FIG. 15 which are similar to that in Embodiment 1 (FIG. 4) is assigned similar reference numerals as in FIG. 4 and explanations thereof will be omitted.

In FIG. 15, the Q signal (Q component) and I signal (I component) in a phase modulated signal of which wave shape distortion is compensated for by a not-shown equalizer are subjected to similar conversion to that explained in Embodiment 1 by converting section 201. The Q' signal and I' signal obtained by converting section 201 are outputted to absolute value calculating section 1201 and absolute value calculating section 1202, respectively.

Absolute value calculating section 1201 calculates the absolute value of Q' signal amplitude. The calculated absolute value of the Q' signal amplitude is equivalent to the distance from I' axis 112 of each signal point shown in FIG. 13A. An absolute value of this Q' signal amplitude is outputted as a likelihood of bit 3N.

Absolute value calculating section 1202 calculates the absolute value of I' signal amplitude. The calculated absolute value of the I' signal amplitude is equivalent to the distance from Q' axis 113 of each signal point shown in FIG. 13B. An absolute value of this I' signal amplitude is outputted as a likelihood of bit 3N+1.

Absolute value calculating section 1203 calculates the difference of the absolute value of Q' signal amplitude and absolute value of I' signal amplitude then calculates the absolute value of such a difference. The calculated difference of the absolute value is equivalent to the absolute value of the difference between the distance from I' axis 112 and distance from Q' axis 113 of each signal point as shown in FIG. 14. The calculated difference of the absolute value is outputted as a likelihood of bit 3N+2.

In addition, the aforementioned explained likelihood calculation can be realized not only by hardware but it can be realized by CPU microprocessors or monolithic IC such as LSI, etc.

Thus, the likelihood calculated by a decoding apparatus according to the present embodiment is outputted to a not-shown error correction decoding apparatus along with a signal (symbol) decoded by a decoding apparatus according to either one of the Embodiment 1 to Embodiment 5. Accordingly, such an error correction decoding apparatus can generate the demodulated data with high precision at the time of error correction decoding because it is possible not only to use the decoded symbol but also the likelihood of each bit included in such a symbol.

Moreover, in the present embodiment, although the calculation method of the likelihood of each bit in the case when using 8PSK method as an M-ary phase modulation method was explained, but the present invention can be applied to a calculation method of a likelihood in the case when using other M-ary phase modulation methods such as (for instance, 4PSK method or 16PSK method, etc.). In such a case, considering the locations of signal points with the same predetermined bit value in symbol mapping that is based on M-ary phase modulation method, it is possible to calculate the likelihood of each bit if using the features inherent in such a symbol mapping (in the above-mentioned 8PSK method, for instance, the likelihood of bit 3N is the specific feature of "an absolute value of Q' signal amplitude", etc.).

Referring to the previously used FIG. 5, the likelihood calculation method in the case when using π /4 shift 4PSK as an M-ary phase modulation method beside the 8PSK method will be explained below. The likelihood of a predetermined bit (assume bit 2N in FIG. 5) that compose a certain signal point (here, "signal point object" is assumed) is calculated as given below. The signal point of a value of such a predetermined bit (bit 2N) is different from an object signal point is detected as a candidate signal point (here, signal point 303 and signal point 304). Next, from candidate signal points, the signal point of which the distance becomes the smallest and object signal point (here, signal point 303) is detected. Finally, the distance/2 in between the detected signal point (here, signal point 303) and object signal point is the likelihood of the aforementioned predetermined bit of the object signal point.

A decoding apparatus according to any of the above-mentioned embodiments can be implemented in communication terminal apparatus or base station apparatus of a digital mobile communication system. The decoding apparatus according to any of the above-mentioned embodiments, further, can execute decoding of a phase modulated signal while keeping the apparatus size and calculation amount.

As it is clear to a person skilled in the art, it is possible to implement the present invention by using a normally programmed commercial computer and microprocessor based on the technology described in the aforementioned embodiments. As it is clear to a person skilled in the art, further, the present invention includes a computer program carried out by the person skilled in the art based on the technology described in the aforementioned embodiments.

A computer program product which is a recording medium including instructions that can be used to program the computer to implement the present invention is included in the claims range of the present invention. Such a recording medium is equivalent to floppy disk, Laser disk, CD-ROM and any disk such as magnetic disk, ROM, RAM, EPROM, EEPROM, magnetic-optical card, memory card, DVD, etc., but in particular it is not limited to these.

As described above and according to the present invention, it is possible to provide a decoding apparatus that can perform decoding of a phase modulated signal while keeping apparatus size and calculations amount. Moreover, according to the present invention, it is possible to provide a decoding apparatus that calculates the likelihood of each bit included in decoded symbol while keeping apparatus size and calculations amount.

The present application is based on the Japanese Patent Application No. 2001-053189 filed on Feb. 27, 2001, entire content of which is expressly incorporated by reference herein.

### Industrial Applicability

The present invention is applicable to a communication terminal apparatus or a base station apparatus of a digital mobile communication system.

## Claims

1. A decoding apparatus comprising:
receiving section which receives a phase modulated signal modulated using M-ary phase modulation method; and
decoding section which carries out decoding based on locations of signal points with the same predetermined bit value in a symbol mapping that is based on said M-ary phase modulation method.

2. The decoding apparatus according to claim 1, wherein decoding section converts said phase modulated signal based on locations of signal points with the same predetermined bit value in a symbol mapping that is based on 8PSK method, and decodes said phase modulated signal using quadrature component and in-phase component of the converted phase modulated signal and absolute value of said quadrature component and absolute value of said in-phase component.

3. The decoding apparatus according to claim 2, wherein decoding section calculates the likelihood of said phase modulated signal using absolute value of quadrature component of the converted phase modulated signal, absolute value of in-phase component of said phase modulated signal and absolute value of the difference of each absolute value.

4. The decoding apparatus according to claim 1, wherein decoding section decodes phase modulated signal using a predetermined rotation pattern.

5. The decoding apparatus according to claim 1, wherein decoding section decodes phase modulated signal of which said rotation pattern is restored so that wave shape distortion is compensated for by an equalizer using tap coefficients corresponding to a predetermined rotation pattern.

6. The decoding apparatus according to claim 5, wherein decoding section decodes a phase modulated signal of which wave shape distortion is compensated for by decision feedback-type equalizer.

7. The decoding apparatus according to claim 5, wherein decoding section decodes a phase modulated signal of which wave shape distortion is compensated for by MLSE-type equalizer.

8. A communication terminal apparatus provided with a decoding apparatus, wherein said decoding apparatus comprising:
receiving section which receives a phase modulated signal modulated using M-ary phase modulation method; and
decoding section which carries out decoding based on locations of signal points with the same predetermined bit value in a symbol mapping that is based on said M-ary phase modulation method.

9. A base station apparatus provided with a decoding apparatus, wherein said decoding apparatus comprising:
receiving section which receives a phase modulated signal modulated using M-ary phase modulation method; and
decoding section which carries out decoding based on locations of signal points with the same predetermined bit value in a symbol mapping that is based on said M-ary phase modulation method.

10. A program functioned by a computer as a decoding section which decodes a phase modulated signal modulated using M-ary phase modulation method based on locations of signal points with the same predetermined bit value in a symbol mapping that is based on said M-ary phase modulation method.

11. A decoding method comprising decoding step which decodes a phase modulated signal modulated using M-ary phase modulation method based on locations of signal points with the same predetermined bit value in a symbol mapping that is based on said M-ary phase modulation method.
